# EUROPEAN PATENT SPECIFICATION

(11) **EP 3 487 224 B1**
(45) Date of publication and mention of the grant of the patent: **01.04.2026**
(21) Application number: 16912368.4
(22) Date of filing: 12.08.2016
(51) Int. Cl.: H04W 72/231, H04W 4/70, H04W 48/12

(54) **METHOD FOR SWITCHING SIGNAL TRANSMISSION MODE, BASE STATION AND TERMINAL DEVICE**
VERFAHREN ZUM UMSCHALTEN EINES SIGNALÜBERTRAGUNGSMODUS, BASISSTATION UND ENDGERÄTEVORRICHTUNG
PROCÉDÉ PERMETTANT DE COMMUTER UN MODE DE TRANSMISSION DE SIGNAL, STATION DE BASE ET DISPOSITIF DE TERMINAL

(43) Date of publication of application: 22.05.2019
(73) Proprietor: Huawei Technologies Co., Ltd., Longgang District Shenzhen, Guangdong 518129 (CN)
(72) Inventor: LI, Qi, Shenzhen Guangdong 518129 (CN)
(74) Representative: Epping - Hermann - Fischer
(86) International application number: PCT/CN2016/094900
(87) International publication number: WO 2018/027913

(56) References cited:
- WO-A1-2015/122665
- WO-A1-2016/048519
- WO-A2-01/73971
- CN-A- 101 467 374
- CN-A- 101 489 264
- CN-A- 101 640 561
- CN-A- 101 969 369
- US-A1- 2004 042 428
- US-A1- 2015 016 312
- US-A1- 2018 027 483
- US-B1- 8 068 877

## Description

### TECHNICAL FIELD

Embodiments of the present invention relate to the field of LTE technologies, and in particular, to a signal transmission mode switching.

### BACKGROUND

With continuous development of the science and technology, users impose higher requirements on a signal transmission rate and the like. However, signal coverage depth that can be implemented by using an existing LTE technology cannot meet user requirements. For example, in some remote regions, a signal transmitted by a base station by using a downlink channel cannot be received by a terminal device, and the terminal device cannot send a data signal to the base station by using an uplink channel. Enhanced machine type communication (enhanced Machine Type Communication, eMTC for short) may be used, so that the signal coverage depth can meet requirements of more users. The eMTC is an Internet of Things technology in a protocol release LTE R13. In the technology, coverage is mainly improved by using channel repetition and frequency hopping technologies, and the coverage depth may be improved by a maximum of 15 db according to a protocol requirement. In other words, the existing LTE technology can support normal coverage (Normal Coverage, NC for short), but cannot support deeper coverage. However, the eMTC technology can support coverage enhanced (Coverage Enhanced, CE for short).

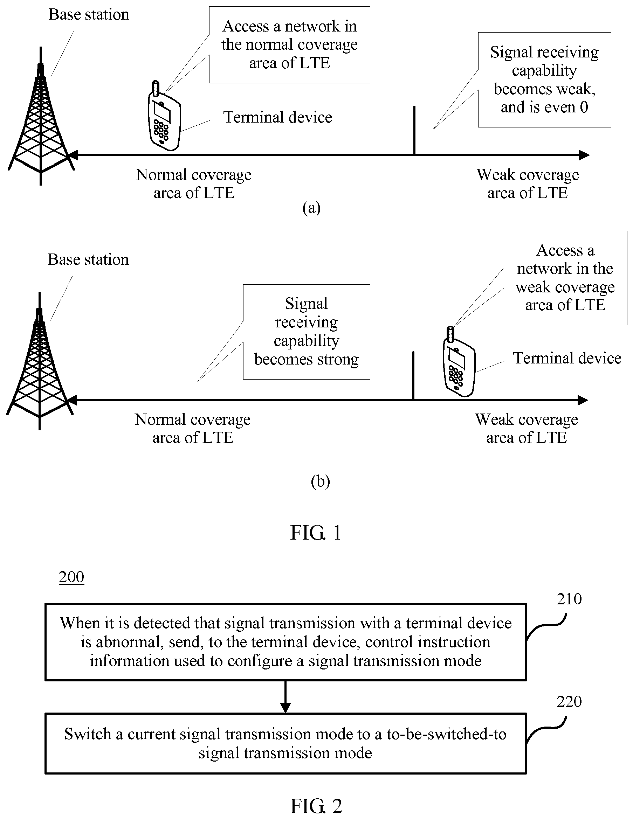

In the prior art, specifically as shown in FIG. 1, it is assumed that a terminal device accesses a network in a normal coverage area of LTE. As shown in FIG. 1(a), in this case, the terminal device is in an NC mode. Because the terminal device does not know existence of an eMTC broadcast, the terminal device reads only an LTE broadcast but does not read the eMTC broadcast. When the terminal device moves to a weak coverage area of LTE, as shown in FIG. 1(b), the terminal device needs to enter a CE mode. Although a base station may deliver radio resource control (Radio Resource Control, RRC for short) signaling, to instruct the terminal device to switch from the NC mode to the CE mode, the terminal device certainly does not receive the eMTC broadcast because the terminal device does not know existence of the eMTC broadcast during network access. Consequently, the terminal device cannot work in the CE mode. According to a current protocol, the terminal device can only be "offline" as a signal becomes weak. After being offline, the terminal device automatically chooses, based on downlink signal strength, to access the network in the CE mode, so as to read the eMTC broadcast, and then work in the CE mode. In this way, although the terminal device can switch from the NC mode to the CE mode, the switching performed by the terminal device is not active switching. Instead, the terminal device passively switches, based on the downlink signal strength, to the CE mode for network access only when the terminal device moves to the weak coverage area of LTE and be "offline" as the signal becomes weak.

Therefore, how to implement switching of a terminal device between an NC mode and a CE mode becomes a problem that needs to be resolved in the present invention. US 2004042428 A1 discusses a method of changing the transmission mode of a signal from a beamforming mode to a single antenna mode in a situation wherein calibration of an antenna array of the base transceiver station resides below a threshold value describing the quality of the calibration.

WO 2016048519 A1 provides method for operating in enhanced coverage (EC) modes.

US 8068877 B1 provides systems and methods of controlling transmission of communications from a base station to a wireless communication station.

WO 0173971 A2 discusses a method and apparatus for optimizing the usage of an antenna array beamforming technique.

WO2016126142A1 discloses that a system information update notification may be transmitted/received in system information modification period n, updated system information may be transmitted/received in system information modification period (n+1), and the updated system information may be applied from a particular time point after the system information modification period (n+1). The updated system information may include EPDCCH configuration information or start OFDM symbol information which enables a UE to start control/data reception.

WO2015122665A1 discloses a method and apparatus for indicating change of a coverage enhancement (CE) mode in a wireless communication system. A CE mode for coverage enhancement may be defined. A user equipment (UE) determines whether the CE mode changes. If it is determined that the CE mode changes, the UE detaches with a network, and re-attaches with the network based on the changed CE mode.

US 2015/016312 A1 discloses a method, wherein an eNB can configure an UE to switch coverage modes from a normal mode to a Coverage Enhanced, CE, mode. The eNB can make such a decision either based on a reported channel measurement, such as a RSRP or a path-loss, from the UE or based on statistics such as for example outcomes.

### SUMMARY

Embodiments of the present invention provide a signal transmission mode switching method, a program, a processor readable medium and a terminal device. The present invention is defined in the attached set of claims.

According to a first aspect of the present invention, a signal transmission mode switching method is provided. The method includes:
receiving, control instruction information used to configure a signal transmission mode from a base station, wherein the control instruction information is radio resource control, RRC, information;
receiving, a second broadcast from the base station, where the second broadcast is a broadcast obtained after an added broadcast information element is added to a first broadcast, wherein the first broadcast is a broadcast corresponding to a Normal Coverage, NC, mode;
determining, based on the second broadcast, configuration information corresponding to a Coverage Enhanced, CE, mode, wherein the CE mode is configured based on the configuration information;
configuring the CE mode based on the configuration information; and switching from the NC mode to the CE mode based on the control instruction information, wherein the NC mode is supported by LTE technology, and the CE mode is supported by enhanced Machine Type Communication, eMTC, technology, and
before the switching from the NC mode to the CE mode, the method further comprises:
   receiving, uplink transmission resource indication information from the base station; determining, an uplink transmission resource based on the uplink transmission resource indication information; and
   transmitting, to the base station by using the uplink transmission resource, the response message indicating successful configuration of the CE mode.

According to a second aspect of the present invention further provides a terminal device. The terminal device includes:
a receiver, configured to receive control instruction information used to configure a signal transmission mode from a base station, wherein the control instruction information is radio resource control, RRC, information; and configured to receive a second broadcast from the base station, where the second broadcast is a broadcast obtained after an added broadcast information element is added to a first broadcast, wherein the first broadcast is a broadcast corresponding to a Normal Coverage, NC, mode; and
a processor, configured to determine configuration information corresponding to a Coverage Enhanced, CE, mode, based on the second broadcast; and configured to configure the CE mode based on the configuration information; and configured to switch from the NC mode to the CE mode based on the control instruction information, wherein the NC mode is supported by LTE technology, and the CE mode is supported by enhanced Machine Type Communication, eMTC, technology, wherein the CE mode is configured based on the configuration information, and
before the switching from the NC mode to the CE mode,
the receiver is further configured to receive uplink transmission resource indication information from the base station ;
the processor is further configured to determine an uplink transmission resource based on the uplink transmission resource indication information; and a transmitter is configured to transmit, to the base station by using the uplink transmission resource, the response message indicating successful configuration of the CE mode.

### BRIEF DESCRIPTION OF DRAWINGS

FIG. 1 is a schematic structural diagram in which a terminal device passively switches from an NC mode to a CE mode in the prior art;
FIG. 2 is a schematic flowchart of a signal transmission mode switching method according to Embodiment 1 of the present invention;
FIG. 3 is a schematic flowchart of another signal transmission mode switching method according to Embodiment 2 of the present invention;
FIG. 4 is a schematic flowchart of a method for implementing cognitive consistency between a base station and a terminal device about a mode switching time period according to an embodiment of the present invention;
FIG. 5 is a schematic flowchart of another method for implementing cognitive consistency between a base station and a terminal device about a mode switching time period according to an embodiment of the present invention;
FIG. 6 is a schematic flowchart of another method for implementing cognitive consistency between a base station and a terminal device about a mode switching time period according to an embodiment of the present invention;
FIG. 7 is a schematic flowchart of another method for implementing cognitive consistency between a base station and a terminal device about a mode switching time period according to an embodiment of the present invention;
FIG. 8 is a schematic structural diagram of a base station according to an example;
FIG. 9 is a schematic structural diagram of a terminal device according to Embodiment 4 of the present invention;
FIG. 10 is a schematic structural diagram of another base station according to an example; and
FIG. 11 is a schematic structural diagram of another terminal device according to Embodiment 6 of the present invention.

In particular, the examples described in the Figures are not to be regarded as embodiments of the invention. The examples are described for increasing comprehensibility.

### DESCRIPTION OF EMBODIMENTS

To make the objectives, technical solutions, and advantages of the embodiments of the present invention clearer, the following describes the technical solutions in the embodiments of the present invention with reference to the accompanying drawings in the embodiments of the present invention. Apparently, the described embodiments are some rather than all of the embodiments of the present invention.

There may be a plurality of signal transmission modes. However, to better describe the technical solutions of the present invention, only two transmission modes are used as an example for description in the following specific embodiments. In addition, in specific examples enumerated in the following, a first transmission mode is defined as an NC mode and a second transmission mode is defined as a CE mode. Certainly, when ordinal numbers such as "first" and "second" are mentioned in the embodiments of the present invention, they are merely used for distinguishing unless they definitely show a sequence according to context.

Embodiment 1 of the present invention provides a schematic flowchart 200 of a signal transmission mode switching method. The method is mainly performed by a base station. Specifically, as shown in FIG. 2, the method includes the following steps. Step 210: When it is detected that signal transmission with a terminal device is abnormal, send, to the terminal device, control instruction information used to configure a signal transmission mode.

Specifically, there may be a plurality of cases in which the signal transmission between a base station and the terminal device is abnormal. For example, it is detected that a received signal strength value of the terminal device is less than a first predetermined threshold, or it is detected that a rate at which the terminal device sends an uplink signal is less than a second predetermined threshold. Optionally, the control instruction information may be radio resource control (Radio Resource Control, RRC for short) information.

Usually, when the terminal device accesses a network from a "near point", the terminal device is in normal signal coverage, and has a relatively strong signal receiving capability. However, when the terminal device accesses the network from a "far point", the terminal device is in relatively weak signal coverage, and consequently has a relatively weak signal receiving capability. Therefore, the base station first needs to detect a received signal strength value when the terminal device accesses the network, to determine whether the terminal device of a user accesses the network from the "near point" or the "far point". Certainly, readers should understand that both the "near point" and the "far point" are relative concepts. **In** coverage of a signal sent by the base station, a point at which a signal receiving capability is relatively strong is the "near point", and a location at an edge of the coverage of the signal sent by the base station or a location at which the signal receiving capability is relatively weak or is even 0 may be defined as the "far point". For example, as shown in FIG. 1(a), the terminal device accesses the network from the "near point"; and as shown in FIG. 1(b), the terminal device accesses the network from the "far point". When the terminal device accesses the network from the "far point", a received signal strength value is usually less than the first predetermined threshold. Alternatively, when the terminal device accesses the network from the "far point", a rate of an uplink signal received by the base station side may also be less than the second predetermined threshold. Therefore, the base station needs to send, to the terminal device, the control instruction information used to configure a signal transmission mode. The control instruction information is used to instruct to switch a current signal transmission mode on the terminal device side to a to-be-switched-to signal transmission mode.

Certainly, the foregoing enumerated "abnormal cases" are merely examples, and readers cannot conclude the abnormal cases as all "abnormal cases". There may be a plurality of cases in which the signal transmission between the base station and the terminal device is abnormal. For brief description, details are not described herein. Step 220: Switch a current signal transmission mode to a to-be-switched-to signal transmission mode.

Specifically, the to-be-switched-to signal transmission mode is a second signal transmission mode other than the current signal transmission mode.

Before switching the signal transmission mode, the terminal device first needs to determine configuration information corresponding to the to-be-switched-to signal transmission mode, for example, basic cell information corresponding to the to-be-switched-to signal transmission mode. The configuration information needs to be obtained by using a broadcast sent by the base station. As described in the background, for example, the base station accesses the network from the "near point". In this case, a corresponding signal transmission mode is NC. When the terminal device needs to switch to a CE mode, the terminal device does not know existence of an eMTC broadcast. In other words, when the terminal device needs to switch the current signal transmission mode to the to-be-switched-to signal transmission mode, the terminal device does not know broadcast content corresponding to the to-be-switched-to signal transmission mode, and therefore cannot determine, based on the broadcast content corresponding to the to-be-switched-to signal transmission mode, the configuration information corresponding to the to-be-switched-to signal transmission mode. Therefore, the terminal device cannot configure the to-be-switched-to signal transmission mode. In this case, the present invention provides the following several manners of obtaining the configuration information. Exemplarily, in an exemplary first manner when the control instruction information used to configure a signal transmission mode is sent to the terminal device, a newly added broadcast information element may be added to/deleted from the control instruction information, so that the terminal device may determine, based on the newly added broadcast information element and a first broadcast, the configuration information corresponding to the to-be-switched-to signal transmission mode. The first broadcast is a broadcast corresponding to the current signal transmission mode.

It should be understood that both the broadcast corresponding to the current signal transmission mode and a broadcast corresponding to the to-be-switched-to signal transmission mode are broadcasts periodically sent by the base station. When the terminal device knows existence of the broadcasts and needs to receive the broadcasts, the terminal device can regularly receive the broadcasts.

In a second manner, a newly added broadcast information element is added to/deleted from a first broadcast corresponding to the current signal transmission mode, and an obtained broadcast is used as a second broadcast, so that the terminal device determines, based on the second broadcast, the configuration information corresponding to the to-be-switched-to signal transmission mode. The first broadcast is a broadcast corresponding to the current signal transmission mode.

In a specific example, if the first broadcast is a Long Term Evolution (Long Term Evolution, LTE for short) broadcast, and the second broadcast is an eMTC broadcast, there may be two types of newly added broadcast information elements.

One type is a most important broadcast, namely, a MIB (Master Information Block) broadcast, and the newly added broadcast information element is schedulingInfoSIB1-BR-r13.

The other type is a system broadcast, namely, a SIB (System Information Blocks) broadcast, and newly added broadcast content is:
an information element such as "bandwidthReducedAccessRelatedInfo-r13", "CellSelectionInfoCE-r13", or "t-ReselectioNCUTRA-CE-r13".

Two other manners are described in detail when signal transmission mode switching performed on the terminal device side is described in the following, and details are not described herein.

It should be noted that the second broadcast may include a newly added information element and/or an information element exactly the same as an information element in the first broadcast, or include a newly added information element and/or an information element having a same property as an information element in the first broadcast. Specific content in the second broadcast may be determined according to an actual situation, and is not limited herein.

After sending the control instruction information, the base station needs to receive a response message that indicates successful configuration of the to-be-switched-to signal transmission mode and that is sent by the terminal device. Therefore, before this, the base station needs to send uplink transmission resource indication information to the terminal device. The indication information is used to instruct the terminal device to determine an uplink transmission resource and transmit, to the base station by using the uplink transmission resource, the response message indicating successful configuration of the to-be-switched-to signal transmission mode.

After receiving the response message, the base station switches the current signal transmission mode to the to-be-switched-to signal transmission mode.

The base station side may determine a specific moment of switching the signal transmission mode, to implement consistency between the base station side and the terminal device side during signal transmission mode switching. The specific moment of determining the signal transmission mode may include the following.

A moment of receiving the response message that indicates successful configuration of the to-be-switched-to signal transmission mode and that is sent by the terminal device is used as a start moment, and the current signal transmission mode is switched to the to-be-switched-to signal transmission mode at a moment upon reception of an X^{th} subframe signal, where X is a positive integer greater than or equal to 1. Alternatively, if the response message that indicates successful configuration of the to-be-switched-to signal transmission mode and that is sent by the terminal device is received within a first predetermined time period (it is assumed that the first time period equals a time of receiving K subframe signals), the current signal transmission mode is switched to the to-be-switched-to signal transmission mode at a moment upon reception of an N^{th} subframe signal after an end of the first predetermined time period, where N is a positive integer greater than or equal to 1, and the first time period starts from a moment of sending, by the base station to the terminal device, the control instruction information used to configure a signal transmission mode. To be specific, a moment upon reception of K+N subframe signals after the moment of sending, by the base station to the terminal device, the control instruction information used to configure a signal transmission mode is used as a moment of switching the current signal transmission mode to the to-be-switched-to signal transmission mode. However, if the response message that indicates successful configuration of the to-be-switched-to signal transmission mode and that is sent by the terminal device is not received within the first predetermined time period, the current signal transmission mode is maintained. Both K and N are positive integers greater than or equal to 1.

In another case, the base station and the terminal device agree on that after the base station successfully sends the control instruction information to the terminal device, the base station and the terminal device separately switch the current signal transmission mode to the to-be-switched-to signal transmission mode. Certainly, after receiving the control instruction information, the terminal device sends, to the base station, a response message indicating successful receiving of the control instruction information. Then the base station and the terminal side switch the signal transmission mode. When sending the uplink transmission resource indication information to the terminal device, the base station transmits the uplink transmission resource indication information on a signal transmission channel corresponding to the second signal transmission mode. Similarly, the uplink transmission resource indication information is used to instruct the terminal device to determine the uplink transmission resource and transmit, to the base station by using the uplink transmission resource, the response message indicating successful configuration of the to-be-switched-to signal transmission mode.

The base station side also receives, on the signal transmission channel corresponding to the second signal transmission mode, the response message that indicates successful configuration of the to-be-switched-to signal transmission mode and that is sent by the terminal device.

**In** another case, the base station and the terminal device side do not agree on a time of simultaneously switching the signal transmission mode. After receiving the control instruction information that is used to configure a signal transmission mode and that is sent by the base station, the terminal device side configures the to-be-switched-to signal transmission mode, and switches the signal transmission mode after configuration succeeds, that is, switches the current signal transmission mode to the to-be-switched-to signal transmission mode. Before receiving the response message that is used to indicate successful configuration of the to-be-switched-to signal transmission mode and that is sent by the terminal side, the base station side does not know when the terminal side switches the signal transmission mode. Therefore, the base station side separately sends the uplink transmission resource indication information to the terminal device by using the current signal transmission mode and the second signal transmission mode.

**In** addition, the base station separately detects a first signal transmission channel corresponding to the current signal transmission mode and a second signal transmission channel corresponding to the second signal transmission mode, to ensure that the response message that indicates successful configuration of the signal transmission mode and that is sent by the terminal device is able to be received through one of the first signal transmission channel or the second signal transmission channel.

A moment of switching, by the base station side, the signal transmission mode is as follows: A moment of receiving the response message that indicates successful configuration of the signal transmission mode and that is sent by the terminal device is used as a start moment, and the current signal transmission mode is switched to the to-be-switched-to signal transmission mode at a moment upon reception of a J^{th} subframe signal, where J is a positive integer greater than or equal to 1.

In the signal transmission mode switching method provided in the foregoing Embodiment 1 of the present invention, the base station side sends, to the terminal device in a plurality of manners, the broadcast corresponding to the to-be-switched-to signal transmission mode, so that the terminal device determines, based on the broadcast information, the configuration information of the to-be-switched-to signal transmission mode; configures the to-be-switched-to signal transmission mode based on the configuration information; and then switches the current signal transmission mode to the to-be-switched-to signal transmission mode. In addition, the base station and the terminal device separately switch, in an agreed time period, the current signal transmission mode to the to-be-switched-to signal transmission mode, to avoid a problem of cognitive inconsistency between the base station and the terminal device about a transmission mode.

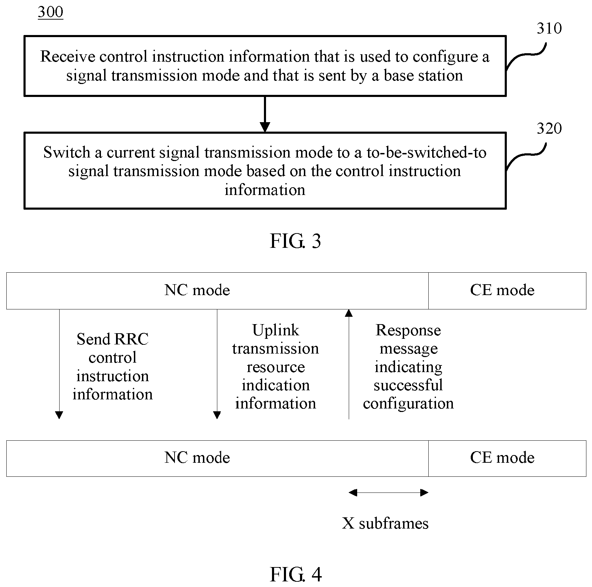

Embodiment 2 of the present invention further provides a schematic flowchart 300 of another signal transmission mode switching method. The method is mainly performed by a terminal device. Specifically, as shown in FIG. 3, the method includes the following steps:
Step 310: Receive control instruction information that is used to configure a signal transmission mode and that is sent by a base station.
Step 320: Switch a current signal transmission mode to a to-be-switched-to signal transmission mode based on the control instruction information.

Specifically, the to-be-switched-to signal transmission mode is a second signal transmission mode other than the current signal transmission mode. Before configuring the to-be-switched-to signal transmission mode based on the control instruction, the terminal device first needs to obtain configuration information corresponding to the to-be-switched-to signal transmission mode. A specific manner of obtaining the configuration information corresponding to the to-be-switched-to signal transmission mode includes the following.

Exemplarily, in an exemplary first manner, when sending, to the terminal device, the control instruction information used to configure a signal transmission mode, the base station may add a newly added broadcast information element to/delete a newly added broadcast information element from the control instruction information. The terminal device determines, based on the newly added broadcast information element and a first broadcast, the configuration information corresponding to the to-be-switched-to signal transmission mode. The first broadcast is a broadcast corresponding to the current signal transmission mode. The terminal device further needs to configure the to-be-switched-to signal transmission mode based on the configuration information.

It should be understood that both the broadcast corresponding to the current signal transmission mode and a broadcast corresponding to the to-be-switched-to signal transmission mode are broadcasts periodically sent by the base station. When the terminal device knows existence of the broadcasts and needs to receive the broadcasts, the terminal device can regularly receive the broadcasts.

In a second manner, the terminal device receives a second broadcast sent by the base station. The second broadcast is actually a broadcast obtained after a newly added broadcast information element is added to/deleted from a first broadcast, and the first broadcast is a broadcast corresponding to the current signal transmission mode. The terminal device may determine, based on the second broadcast, the configuration information corresponding to the to-be-switched-to signal transmission mode; and configure the to-be-switched-to signal transmission mode based on the configuration information.

In a specific example, if the first broadcast is an LTE broadcast, and the second broadcast is an eMTC broadcast, there may be two types of newly added broadcast information elements.

One type is a MIB broadcast, and the newly added broadcast information element is schedulingInfoSIB1-BR-r13.

The other type is a SIB broadcast, and newly added broadcast content is:
an information element such as "bandwidthReducedAccessRelatedInfo-r13", "CellSelectionInfoCE-r13", or "t-ReselectioNCUTRA-CE-r13".

In a third manner, if the terminal device clearly knows existence of a second broadcast corresponding to the to-be-switched-to signal transmission mode, the terminal device may directly receive the second broadcast. The second broadcast includes an information element the same as an information element in a first broadcast or an information element having a same property as an information element in a first broadcast, and/or a newly added broadcast information element relative to the first broadcast. The first broadcast is a broadcast corresponding to the current signal transmission mode. The terminal device may determine the configuration information of the to-be-switched-to signal transmission mode based on the second broadcast; and configure the to-be-switched-to signal transmission mode based on the configuration information. The terminal device receives the second broadcast after receiving the control instruction information that is used to configure a signal transmission mode and that is sent by the base station. To be specific, the terminal device may receive the broadcast before switching the mode or after switching the mode.

In a fourth manner, when it is not determined that the current signal transmission mode of the terminal device is which signal transmission mode, the terminal device may separately obtain a first broadcast and a second broadcast. Then the terminal device determines, from the first broadcast and the second broadcast, a broadcast corresponding to the to-be-switched-to signal transmission mode. The terminal device determines, based on the broadcast corresponding to the to-be-switched-to signal transmission mode, configuration information corresponding to the to-be-switched-to signal transmission mode; and then configures the to-be-switched-to signal transmission mode based on the configuration information.

Certainly, only the second broadcast may be read. In this case, the second broadcast may include a newly added broadcast information element and/or an information element exactly the same as an information element in the first broadcast. Therefore, even if the to-be-switched-to signal transmission mode is a signal transmission mode corresponding to the first broadcast, configuration information corresponding to the signal transmission mode that is corresponding to the first broadcast may be obtained only after the newly added information element is deleted or added.

It should be noted that, it can also be learned from the foregoing description that the second broadcast may include a newly added information element and/or an information element exactly the same as an information element in the first broadcast, or include a newly added information element and/or an information element having the same property as an information element in the first broadcast. Specific content in the second broadcast may be determined according to an actual situation, and is not limited herein.

Certainly, after successfully configuring the to-be-switched-to signal transmission mode, the terminal device further needs to send, to the base station, a response message indicating successful configuration of the to-be-switched-to signal transmission mode. Therefore, before this, the terminal device first needs to receive uplink transmission resource indication information, determine an uplink transmission resource based on the uplink transmission resource indication information, and transmit, to the base station by using the uplink transmission resource, the response message indicating successful configuration of the to-be-switched-to signal transmission mode.

After sending, to the base station side, the response message indicating successful configuration of the to-be-switched-to signal transmission mode, the terminal side may switch the signal transmission mode. A specific switching moment includes the following: A moment of receiving, by the base station, the response message indicating successful configuration of the to-be-switched-to signal transmission mode is used as a start moment, and the signal transmission mode is switched at a moment after an X^{th} subframe signal is received, where X is a positive integer greater than or equal to 1.

Alternatively, if the response message that indicates successful configuration of the to-be-switched-to signal transmission mode and that is sent by the terminal device is received within a first predetermined time period (it is assumed that the first time period equals a time of receiving K subframe signals), the current signal transmission mode is switched to the to-be-switched-to signal transmission mode at a moment upon reception of an N^{th} subframe signal after an end of the first predetermined time period, where N is a positive integer greater than or equal to 1, and the first time period starts from a moment of sending, by the base station to the terminal device, the control instruction information used to configure a signal transmission mode. To be specific, a moment upon reception of K+N subframe signals after the moment of sending, by the base station to the terminal device, the control instruction information used to configure a signal transmission mode is used as a moment of switching the current signal transmission mode to the to-be-switched-to signal transmission mode. However, if the response message that indicates successful configuration of the to-be-switched-to signal transmission mode and that is sent by the terminal device is not received within the first predetermined time period, the current signal transmission mode is maintained. Similarly, the terminal device also needs to maintain an original status. Both K and N are positive integers greater than or equal to 1.

In another case, the base station and the terminal device agree on that after the base station successfully sends the control instruction information to the terminal device, the base station and the terminal device separately switch the current signal transmission mode to the to-be-switched-to signal transmission mode.

In this case, the terminal device performs the following operations after the terminal device switches the signal transmission mode: receiving uplink transmission resource indication information sent by the base station, determining an uplink transmission resource based on the uplink transmission resource indication information, and transmitting, to the base station by using the uplink transmission resource, a response message indicating successful configuration of the to-be-switched-to signal transmission mode.

In another case, the base station and the terminal device side do not agree on a time of simultaneously switching the signal transmission mode. After receiving the control instruction information that is used to configure a signal transmission mode and that is sent by the base station, the terminal device side configures the to-be-switched-to signal transmission mode, and switches the signal transmission mode after configuration succeeds, that is, switches the current signal transmission mode to the to-be-switched-to signal transmission mode. Similar to the foregoing case, the terminal device also performs the following operations after the terminal device switches the signal transmission mode: receiving uplink transmission resource indication information sent by the base station, determining an uplink transmission resource based on the uplink transmission resource indication information, and transmitting, to the base station by using the uplink transmission resource, a response message indicating successful configuration of the to-be-switched-to signal transmission mode.

In the another signal transmission mode switching method provided in Embodiment 2 of the present invention, the terminal device obtains, in a plurality of manners, the broadcast corresponding to the to-be-switched-to signal transmission mode; determines, based on the broadcast information, the configuration information of the to-be-switched-to signal transmission mode; configures the to-be-switched-to signal transmission mode based on the configuration information; and then switches the current signal transmission mode to the to-be-switched-to signal transmission mode. The base station and the terminal device separately switch, in an agreed time period, the current signal transmission mode to the to-be-switched-to signal transmission mode, to avoid a problem of cognitive inconsistency between the base station and the terminal device about a transmission mode.

For the foregoing two embodiments, how to implement, through negotiation, signal transmission mode switching synchronization or asynchronization between the base station and the terminal device is specifically described in the following by using an example. It is assumed that the foregoing current signal transmission mode is NC and the foregoing to-be-switched-to signal transmission mode is CE. To be specific, mode switching is performed between the NC and the CE. It is assumed that control signaling that is used to switch a signal transmission mode and that is sent by the base station to the terminal device is RRC signaling.

When the base station detects that the signal transmission between the base station and the terminal device is abnormal, for example, the terminal device accesses a network from a "near point", specifically as shown in FIG. 1, the terminal device needs to switch from the NC mode to the CE mode, to avoid that the terminal device can normally receive a signal when moving to a weak coverage area of LTE. The NC mode corresponds to an LTE broadcast, and the CE mode corresponds to an eMTC broadcast.

The base station first sends the RRC signaling to the terminal device, to notify the terminal device that a signal transmission mode needs to be switched. The terminal device switches the signal transmission mode from the NC to the CE.

After receiving the control signaling, the terminal device needs to configure a to-be-switched-to signal transmission mode. A specific configuration parameter is obtained by using the eMTC broadcast.

The eMTC broadcast may be obtained in the following four manners.

In a first manner, the base station sends a newly added information element to the terminal device by using the RRC signaling that is used to instruct to switch a signal transmission mode and that is sent by the base station to the terminal device. Alternatively, the base station may send a newly added information element to the terminal device by using other RRC signaling. The newly added information element is a newly added broadcast information element in the eMTC broadcast relative to the LTE broadcast. A specific newly added broadcast information element is described in Embodiment 1 and Embodiment 2, and details are not described herein again.

In a second manner, a newly added information element is added to an LTE broadcast sent by the base station. In this way, even if the terminal device accesses a network from a "near point", the terminal device can still obtain configuration information corresponding to the CE mode.

In a third manner, after the terminal device receives the RRC signaling, the terminal device directly reads the eMTC broadcast. The terminal device triggers, based on the RRC signaling, switching from the NC mode to the CE mode. Certainly, a process of reading the broadcast may be before the NC mode is switched to the CE mode or after the NC mode is switched to the CE mode. It should be noted that if the eMTC broadcast is read in the CE mode, a protocol constraint needs to be released because the terminal device in a connected mode of the CE mode cannot read the broadcast according to stipulation in a current protocol (the protocol LTE R13).

In a fourth manner, regardless of whether the terminal device accesses a network in the NC mode or the CE mode, the terminal device reads both the LTE broadcast and the eMTC broadcast when accessing the network. Alternatively, the terminal device reads only the eMTC broadcast because the eMTC broadcast is obtained based on the LTE broadcast. It can be learned from the foregoing that the eMTC broadcast includes a newly added information element and a broadcast information element having same content or a same property as a broadcast information element in the LTE broadcast. When only the eMTC broadcast is read, a premise is that content in the eMTC broadcast except the newly added information element needs to be the same as content in the LTE broadcast.

By using any one of the foregoing four manners, the content in the eMTC broadcast can be read when the NC mode is switched to the CE mode, and then the CE mode is configured based on the content in the eMTC broadcast. After configuration is completed, a response message indicating successful configuration is sent to the base station side.

Before the response message indicating successful configuration is sent to the base station side, the base station side further needs to send uplink transmission resource indication information to the terminal device, to instruct the terminal device to determine an uplink transmission resource and send the response information to the base station on the uplink transmission resource.

However, during configuration of the CE mode performed by the terminal device, a mode switching time period of the terminal device may be inconsistent with a mode switching time period of the base station. Consequently, when the base station side sends the uplink transmission resource indication information to the terminal device side, the terminal device fails in receiving the uplink transmission resource indication information, or the base station side fails in receiving the response message indicating successful configuration. To avoid the foregoing problem, the base station and the terminal side may set a criterion for switching a signal transmission mode, to ensure that the terminal device can successfully receive the uplink transmission resource indication information, or that the base station side can successfully receive the response message indicating successful configuration of the to-be-switched-to signal transmission mode.

Specifically, the following four manners are included.

In a first manner, specifically, as shown in FIG. 4, the base station side sends, in the NC mode, the RRC signaling and the uplink transmission resource indication information to the terminal device. After receiving the RRC signaling, the terminal device first obtains the eMTC broadcast in any one of the foregoing four manners of obtaining the eMTC broadcast, and configures the CE mode. After completing configuration, the terminal device determines the uplink transmission resource based on the uplink transmission resource indication information, and then sends, by using the uplink transmission resource, the response message indicating successful configuration. A moment of receiving, by the base station, the response message indicating successful configuration is used as a start moment, and the terminal device and the base station simultaneously switch the signal transmission mode from the NC mode to the CE mode at a moment after an X^{th} subframe signal is received, where X is a positive integer greater than or equal to 1.

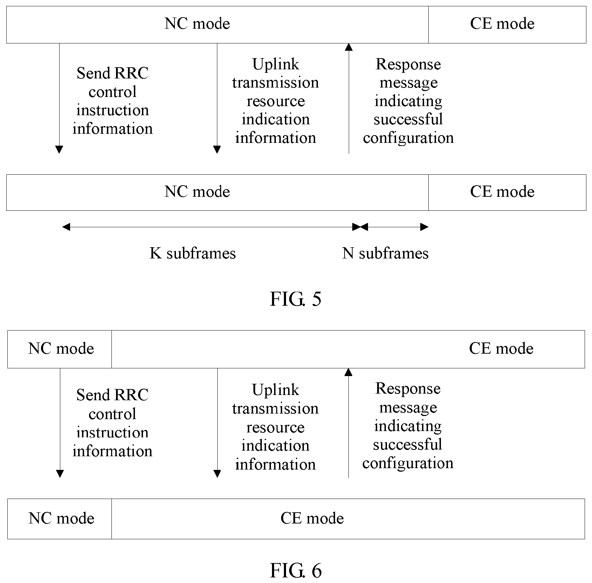

In a second manner, specifically, as shown in FIG. 5, the base station side sends, in the NC mode, the RRC signaling and the uplink transmission resource indication information to the terminal device. After receiving the RRC signaling, the terminal device first obtains the eMTC broadcast in any one of the foregoing four manners of obtaining the eMTC broadcast, and configures the CE mode. After completing configuration, the terminal device determines the uplink transmission resource based on the uplink transmission resource indication information, and then sends, by using the uplink transmission resource, the response message indicating successful configuration. If the response message that indicates successful configuration of the to-be-switched-to signal transmission mode and that is sent by the terminal device is received within a time period of receiving K subframe signals after a moment of sending, by the base station to the terminal device, control instruction information used to configure a signal transmission mode, a current signal transmission mode is switched to the to-be-switched-to signal transmission mode at a moment upon reception of an N^{th} subframe signal after the K subframe signals are received, where N is a positive integer greater than or equal to 1. To be specific, the base station and the terminal device simultaneously switch from the NC mode to the CE mode at a moment upon reception of K+N subframe signals after the moment of sending, by the base station to the terminal device, the control instruction information used to configure a signal transmission mode. However, if the response message that indicates successful configuration and that is sent by the terminal device is not received within the time period of receiving the K subframe signals, the base station and the terminal device maintain the current NC mode. Both K and N are positive integers greater than or equal to 1.

In a third manner, specifically, as shown in FIG. 6, the base station and the terminal side agree on that the base station and the terminal side separately switch the signal transmission mode from the NC mode to the CE mode after the base station successfully sends the RRC signaling to the terminal device. Specifically, after the terminal device receives the RRC signaling, the terminal device sends a response message indicating successful receiving of the RRC signaling. Then the terminal device and the base station switch the signal transmission mode. The base station sends, in the CE mode, the uplink transmission resource indication information to the terminal device. After receiving the uplink transmission resource indication information, and after successfully configuring the CE mode, the terminal device sends, in the CE mode to the base station by using the uplink transmission resource, the response message indicating successful configuration.

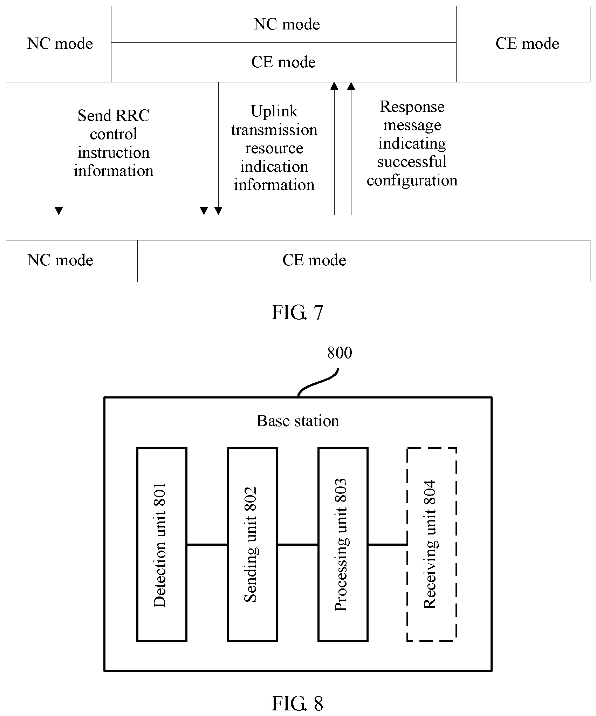

In a fourth manner, specifically, as shown in FIG. 7, the base station and the terminal device do not agree on a time of simultaneously switching the signal transmission mode. In this case, after receiving the RRC signaling sent by the base station, the terminal device configures the CE mode according to a normal procedure and the configuration information in the eMTC broadcast, and directly switches to the CE mode after configuration succeeds. Then the terminal device sends, to the base station, the response message indicating successful configuration. However, the base station side does not know when the terminal can successfully perform configuration, and switches the signal transmission mode. Therefore, the base station may send the uplink transmission resource indication information to the terminal device separately on signal transmission channels in the NC mode and the CE mode. In this way, the terminal device can receive the indication information in both modes, determine the uplink transmission resource based on the indication information, and then transmit, by using the uplink transmission resource, the response message indicating successful configuration. The base station side also separately receives, by using the signal transmission channels in the NC mode and the CE mode, the response message indicating successful configuration; and uses a moment of receiving the response message that indicates successful configuration and that is sent by the terminal device as a start moment, and switches a current signal transmission mode to the to-be-switched-to signal transmission mode at a moment upon reception of a J^{th} subframe signal, where J is a positive integer greater than or equal to 1.

Therefore, the foregoing problem can be resolved: Because the mode switching time period of the terminal device is inconsistent with the mode switching time period of the base station, the terminal device fails in receiving the uplink transmission resource indication information when the base station side sends the uplink transmission resource indication information to the terminal device side, or the base station side fails in receiving the response message indicating successful configuration.

It should be understood that the foregoing description is merely an implementation of a specific embodiment. When the signal transmission mode is switched from the CE mode to the NC mode, a broadcast obtaining process is a reverse process. For example, in the first manner of obtaining a broadcast, the LTE broadcast is obtained. Therefore, although the RRC configuration signaling also includes the newly added information element, the terminal device needs to delete the newly added information element from the eMTC broadcast to obtain the LTE broadcast. Then the terminal device configures the NC, and finally switches from the CE mode to the NC mode. Other manners each are similar to this manner, and details are not described herein. Certainly, only a switching process between the CE and the NC mode is described in the specific example. A principle of a method for switching between other modes is the same or similar, and details are not described herein.

Corresponding to the signal transmission mode switching method provided in the foregoing Embodiment 1, the example described here further provides a base station. Specifically, FIG. 8 is a schematic structural diagram of the base station 800 according to an example. The base station includes a detection unit 801, a sending unit 802, and a processing unit 803.

The detection unit 801 is configured to detect whether signal transmission between the base station and a terminal device is abnormal.

Specifically, the detection unit 801 is specifically configured to: detect whether a received signal strength value of the terminal device is less than a first predetermined threshold; or detect whether a rate at which the terminal device sends an uplink signal is less than a second predetermined threshold.

It should be understood that only two cases in which signal transmission is abnormal are enumerated in the present invention, but it does not represent that only the two cases exist. A signal transmission mode also needs to be switched in another abnormal case, and details are not described herein.

The sending unit 802 is configured to: when the detection unit 801 detects that the signal transmission between the base station and the terminal device is abnormal, send, to the terminal device, control instruction information used to configure a signal transmission mode, where the control instruction information is used to instruct the terminal device to switch a current signal transmission mode on the terminal device side to a to-be-switched-to signal transmission mode.

The processing unit 803 is configured to switch the current signal transmission mode to the to-be-switched-to signal transmission mode, where the to-be-switched-to signal transmission mode is a second signal transmission mode other than the current signal transmission mode.

When the detection unit 801 detects that a mode of the signal transmission between the base station and the terminal device is abnormal, the sending unit 802 immediately sends, to the terminal device based on a detection result of the detection unit, the control instruction information used to switch a signal transmission mode, so that the terminal device switches the signal transmission mode, to avoid unsmooth signal transmission between the terminal device and the base station. The base station side also needs to switch the signal transmission mode, to synchronize the signal transmission mode with the terminal device.

Before switching the signal transmission mode on the terminal side based on the control instruction information, the terminal device further needs to configure the to-be-switched-to signal transmission mode, and configuration information may be obtained in the following two manners. Two other manners are described in detail on the terminal device side, and details are not described herein.

Exemplarily, in an exemplary first manner, when the sending unit 802 sends, to the terminal device, the control instruction information used to configure a signal transmission mode, a newly added broadcast information element may be added to/deleted from the control instruction information, so that the terminal device may determine, based on the newly added broadcast information element and a first broadcast, the configuration information corresponding to the to-be-switched-to signal transmission mode. The first broadcast is a broadcast corresponding to the current signal transmission mode.

It should be understood that both the broadcast corresponding to the current signal transmission mode and a broadcast corresponding to the to-be-switched-to signal transmission mode are broadcasts periodically sent by the base station. When the terminal device knows existence of the broadcasts and needs to receive the broadcasts, the terminal device can regularly receive the broadcasts.

In a second manner, the processing unit 803 adds a newly added broadcast information element to/deletes a newly added broadcast information element from a first broadcast corresponding to the current signal transmission mode, and uses an obtained broadcast as a second broadcast, so that the terminal device determines, based on the second broadcast, the configuration information corresponding to the to-be-switched-to signal transmission mode. The first broadcast is a broadcast corresponding to the current signal transmission mode.

After the sending unit 802 sends the control instruction information to the terminal device, the base station needs to receive a response message that indicates successful configuration of the to-be-switched-to signal transmission mode and that is sent by the terminal device. Therefore, before this, the sending unit 802 needs to send uplink transmission resource indication information to the terminal device. The indication information is used to instruct the terminal device to determine an uplink transmission resource and transmit, to the base station by using the uplink transmission resource, the response message indicating successful configuration of the to-be-switched-to signal transmission mode.

Therefore, in one case, the sending unit 802 is further configured to: before the processing unit switches the current signal transmission mode to the to-be-switched-to signal transmission mode, send the uplink transmission resource indication information to the terminal device.

Correspondingly, the base station further includes a receiving unit 804, configured to receive the response message that indicates successful configuration of the to-be-switched-to signal transmission mode and that is sent by the terminal device. The processing unit 803 is further configured to switch the current signal transmission mode to the to-be-switched-to signal transmission mode based on the response message.

Specifically, a specific moment of switching, by the processing unit 803, the current signal transmission mode to the to-be-switched-to signal transmission mode is as follows: A moment of receiving, by the receiving unit 804, the response message that indicates successful configuration of the to-be-switched-to signal transmission mode and that is sent by the terminal device is used as a start moment, and the processing unit 803 switches the current signal transmission mode to the to-be-switched-to signal transmission mode at a moment upon reception of an X^{th} subframe signal, where X is a positive integer greater than or equal to 1.

Alternatively, a specific moment of switching, by the processing unit 803, the current signal transmission mode to the to-be-switched-to signal transmission mode may be as follows: If the receiving unit 804 receives, within a first predetermined time period, the response message that indicates successful configuration of the to-be-switched-to signal transmission mode and that is sent by the terminal device, the processing unit 803 switches the current signal transmission mode to the to-be-switched-to signal transmission mode at a moment upon reception of an N^{th} subframe signal after an end moment of the first predetermined time period, where N is a positive integer greater than or equal to 1, and the first predetermined time period starts from a moment of sending, by the sending unit 802 to the terminal device, the control instruction information used to configure a signal transmission mode. If the receiving unit 804 does not receive, within the first predetermined time period, the response message that indicates successful configuration of the to-be-switched-to signal transmission mode and that is sent by the terminal device, the processing unit 803 maintains the current signal transmission mode.

In another case, the sending unit 802 is further configured to: after the processing unit switches the current signal transmission mode to the to-be-switched-to signal transmission mode, send the uplink transmission resource indication information to the terminal device. The uplink transmission resource indication information is used to instruct the terminal device to determine the uplink transmission resource and transmit, to the base station by using the uplink transmission resource, the response message indicating successful configuration of the to-be-switched-to signal transmission mode.

The receiving unit 804 is configured to receive the response message that indicates successful configuration of the to-be-switched-to signal transmission mode and that is sent by the terminal device.

In another case, the sending unit 802 is further configured to: after sending, to the terminal device, the control instruction information used to configure a signal transmission mode, separately send the uplink transmission resource indication information to the terminal device by using the current signal transmission mode and the second signal transmission mode. After transmitting the uplink transmission resource indication information by using two different signal transmission modes, the base station further needs to use the detection unit 801 to detect a first receiving unit corresponding to the current signal transmission mode and a second receiving unit corresponding to the second signal transmission mode, to determine that one of the first receiving unit or the second receiving unit can receive the response message that indicates successful configuration of the signal transmission mode and that is sent by the terminal device. The processing unit 803 is further configured to: use a moment of receiving the response message that indicates successful configuration of the signal transmission mode and that is sent by the terminal device as a start moment, and switch the current signal transmission mode to the to-be-switched-to signal transmission mode at a moment upon reception of a J^{th} subframe signal, where J is a positive integer greater than or equal to 1.

When the base station provided in the example runs, the base station performs the method provided in Embodiment 1 of this application. For operating details of the base station, refer to the method provided in Embodiment 1 of this application.

In the base station provided in the example, the sending unit sends, to the terminal device in a plurality of manners, the broadcast corresponding to the to-be-switched-to signal transmission mode, so that the terminal device determines, based on the broadcast information, the configuration information of the to-be-switched-to signal transmission mode; configures the to-be-switched-to signal transmission mode based on the configuration information; and then switches the current signal transmission mode to the to-be-switched-to signal transmission mode. The base station and the terminal device separately switch, in an agreed time period, the current signal transmission mode to the to-be-switched-to signal transmission mode, to avoid a problem of cognitive inconsistency between the base station and the terminal device about a transmission mode.

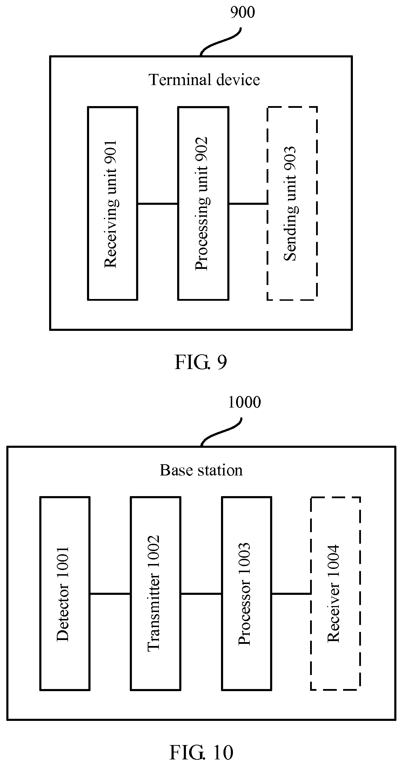

Corresponding to the another signal transmission mode switching method provided in Embodiment 2, Embodiment 4 of the present invention further provides a terminal device. Specifically, FIG. 9 is a schematic structural diagram of the terminal device according to Embodiment 4 of the present invention. The terminal device includes a receiving unit 901 and a processing unit 902.

The receiving unit 901 is configured to receive control instruction information that is used to configure a signal transmission mode and that is sent by a base station.

The processing unit 902 is configured to switch a current signal transmission mode to a to-be-switched-to signal transmission mode based on the control instruction information. The to-be-switched-to signal transmission mode is a second signal transmission mode other than the current signal transmission mode.

Specifically, before configuring the to-be-switched-to signal transmission mode based on the control instruction, the terminal device first needs to obtain configuration information corresponding to the to-be-switched-to signal transmission mode. A specific manner of obtaining the configuration information corresponding to the to-be-switched-to signal transmission mode includes the following.

Exemplarily, in an exemplary first manner, when sending, to the terminal device, the control instruction information used to configure a signal transmission mode, the base station may add a newly added broadcast information element to/delete a newly added broadcast information element from the control instruction information.

The processing unit 902 is configured to: determine, based on the newly added broadcast information element and a first broadcast, the configuration information corresponding to the to-be-switched-to signal transmission mode, where the first broadcast is a broadcast corresponding to the current signal transmission mode; and configure the to-be-switched-to signal transmission mode based on the configuration information.

In a second manner, before the processing unit 902 switches the current signal transmission mode to the to-be-switched-to signal transmission mode based on the control instruction information, the receiving unit 901 receives a second broadcast sent by the base station. The second broadcast is a broadcast obtained after a newly added broadcast information element is added to/deleted from a first broadcast, and the first broadcast is a broadcast corresponding to the current signal transmission mode.

The processing unit 902 is further configured to: determine, based on the second broadcast, the configuration information corresponding to the to-be-switched-to signal transmission mode; and configure the to-be-switched-to signal transmission mode based on the configuration information.

In a third manner, after receiving the control instruction information that is used to configure a signal transmission mode and that is sent by the base station, the receiving unit 901 receives a second broadcast sent by the base station. The second broadcast is a broadcast corresponding to the to-be-switched-to signal transmission mode, the second broadcast includes an information element the same as an information element in a first broadcast or an information element having a same property as an information element in a first broadcast, and/or a newly added broadcast information element relative to the first broadcast, and the first broadcast is a broadcast corresponding to the current signal transmission mode.

The processing unit 902 determines the configuration information of the to-be-switched-to signal transmission mode based on the second broadcast; and configures the to-be-switched-to signal transmission mode based on the configuration information.

In a fourth manner, before the processing unit 902 configures, based on the control instruction information, the to-be-switched-to signal transmission mode, the receiving unit 901 separately receives a first broadcast and a second broadcast, and determines, from the first broadcast and the second broadcast, a broadcast corresponding to the to-be-switched-to signal transmission mode.

The processing unit 902 determines, based on the broadcast corresponding to the to-be-switched-to signal transmission mode, the configuration information corresponding to the to-be-switched-to signal transmission mode; and configures the to-be-switched-to signal transmission mode based on the configuration information. In addition, the receiving unit 901 is further configured to receive uplink transmission resource indication information sent by the base station, to determine an uplink transmission resource based on the uplink transmission resource indication information and send, to the base station, a response message indicating successful configuration of the to-be-switched-to signal transmission mode. Therefore, the terminal device further includes a sending unit 903.

Therefore, in one case, the receiving unit 901 is further configured to: before the processing unit 902 switches the current signal transmission mode to the to-be-switched-to signal transmission mode, receive the uplink transmission resource indication information sent by the base station. The processing unit 902 is further configured to determine the uplink transmission resource based on the uplink transmission resource indication information. The sending unit 903 is configured to transmit, to the base station by using the uplink transmission resource, the response message indicating successful configuration of the to-be-switched-to signal transmission mode.

A specific moment of switching, by the processing unit 902, the signal transmission mode is as follows: A moment of receiving, by the base station, the response message indicating successful configuration of the to-be-switched-to signal transmission mode is used as a start moment, and the signal transmission mode is switched at a moment after an X^{th} subframe signal is received, where X is a positive integer greater than or equal to 1.

Alternatively, if the base station receives, within a first predetermined time period, the response message indicating successful configuration of the to-be-switched-to signal transmission mode, the current signal transmission mode is switched to the to-be-switched-to signal transmission mode at a moment upon reception of an N^{th} subframe signal after an end moment of the first predetermined time period, where N is a positive integer greater than or equal to 1, and the first predetermined time period starts from a moment of sending, by the base station, the control instruction information used to configure a signal transmission mode.

If the base station does not receive, within the first predetermined time period, the response message indicating successful configuration of the to-be-switched-to signal transmission mode, the current signal transmission mode is maintained.

In another case, the receiving unit 901 is further configured to: after the processing unit switches the current signal transmission mode to the to-be-switched-to signal transmission mode, receive the uplink transmission resource indication information sent by the base station. The processing unit 902 is further configured to determine the uplink transmission resource based on the uplink transmission resource indication information. The sending unit 903 is configured to transmit, to the base station by using the uplink transmission resource, the response message indicating successful configuration of the to-be-switched-to signal transmission mode.

When the terminal provided in Embodiment 4 of this application runs, the terminal performs the method provided in Embodiment 2 of this application. For operating details of the terminal, refer to the method provided in Embodiment 2 of this application.

In the terminal device provided in Embodiment 4 of the present invention, the receiving unit obtains, in a plurality of manners, the broadcast corresponding to the to-be-switched-to signal transmission mode. The processing unit determines, based on the broadcast information, the configuration information of the to-be-switched-to signal transmission mode; configures the to-be-switched-to signal transmission mode based on the configuration information; and then switches the current signal transmission mode to the to-be-switched-to signal transmission mode. The base station and the terminal device separately switch, in an agreed time period, the current signal transmission mode to the to-be-switched-to signal transmission mode, to avoid a problem of cognitive inconsistency between the base station and the terminal device about a transmission mode.

Corresponding to the signal transmission mode switching method provided in the foregoing Embodiment 1, the example described here further provides a base station. Specifically, FIG. 10 is a schematic structural diagram of the base station 1000 according to the example. The base station includes a detector 1001, a transmitter 1002, and a processor 1003.

The detector 1001 is configured to detect whether signal transmission between the base station and a terminal device is abnormal.

Specifically, the detector 1001 is specifically configured to: detect whether a received signal strength value of the terminal device is less than a first predetermined threshold; or detect whether a rate at which the terminal device sends an uplink signal is less than a second predetermined threshold. It should be understood that only two cases in which signal transmission is abnormal are enumerated in the present invention, but it does not represent that only the two cases exist. A signal transmission mode also needs to be switched in another abnormal case, and details are not described herein. The transmitter 1002 is configured to: when the detector 1001 detects that the signal transmission between the base station and the terminal device is abnormal, send, to the terminal device, control instruction information used to configure a signal transmission mode. The control instruction information is used to instruct the terminal device to switch a current signal transmission mode on the terminal device side to a to-be-switched-to signal transmission mode.

The processor 1003 is configured to switch the current signal transmission mode to the to-be-switched-to signal transmission mode. The to-be-switched-to signal transmission mode is a second signal transmission mode other than the current signal transmission mode.

When the detector 1001 detects that a mode of the signal transmission between the base station and the terminal device is abnormal, the transmitter 1002 immediately sends, to the terminal device based on a detection result of the detector 1001, the control instruction information used to switch a signal transmission mode, so that the terminal device switches the signal transmission mode, to avoid unsmooth signal transmission between the terminal device and the base station. The base station side also needs to switch the signal transmission mode, to synchronize the signal transmission mode with the terminal device.

Before switching the signal transmission mode on the terminal side based on the control instruction information, the terminal device further needs to configure the to-be-switched-to signal transmission mode, and configuration information may be obtained in the following two manners. Two other manners are described in detail on the terminal device side, and details are not described herein.

Exemplarily, in an exemplary first manner, when sending, to the terminal device, the control instruction information used to configure a signal transmission mode, the transmitter 1002 may add a newly added broadcast information element to/delete a newly added broadcast information element from the control instruction information, so that the terminal device may determine, based on the newly added broadcast information element and a first broadcast, the configuration information corresponding to the to-be-switched-to signal transmission mode. The first broadcast is a broadcast corresponding to the current signal transmission mode.

It should be understood that both the broadcast corresponding to the current signal transmission mode and a broadcast corresponding to the to-be-switched-to signal transmission mode are broadcasts periodically sent by the base station. When the terminal device knows existence of the broadcasts and needs to receive the broadcasts, the terminal device can regularly receive the broadcasts.

In a second manner, the processor 1003 adds a newly added broadcast information element to/deletes a newly added broadcast information element from a first broadcast corresponding to the current signal transmission mode, and uses an obtained broadcast as a second broadcast, so that the terminal device determines, based on the second broadcast, the configuration information corresponding to the to-be-switched-to signal transmission mode. The first broadcast is a broadcast corresponding to the current signal transmission mode.

After the transmitter 1002 sends the control instruction information to the terminal device, the base station needs to receive a response message that indicates successful configuration of the to-be-switched-to signal transmission mode and that is sent by the terminal device. Therefore, before this, the transmitter 1002 needs to send uplink transmission resource indication information to the terminal device. The indication information is used to instruct the terminal device to determine an uplink transmission resource and transmit, to the base station by using the uplink transmission resource, the response message indicating successful configuration of the to-be-switched-to signal transmission mode.

Therefore, in one case, the transmitter 1002 is further configured to: before the processor switches the current signal transmission mode to the to-be-switched-to signal transmission mode, send the uplink transmission resource indication information to the terminal device.

The base station further includes a receiver 1004, configured to receive the response message that indicates successful configuration of the to-be-switched-to signal transmission mode and that is sent by the terminal device.

The processor 1003 is further configured to switch the current signal transmission mode to the to-be-switched-to signal transmission mode based on the response message.

Specifically, a specific moment of switching the current signal transmission mode to the to-be-switched-to signal transmission mode by the processor 1003 is as follows: A moment of receiving, by the receiver 1004, the response message that indicates successful configuration of the to-be-switched-to signal transmission mode and that is sent by the terminal device is used as a start moment, and the processor 1003 switches the current signal transmission mode to the to-be-switched-to signal transmission mode at a moment upon reception of an X^{th} subframe signal, where X is a positive integer greater than or equal to 1.

Alternatively, a specific moment of switching the current signal transmission mode to the to-be-switched-to signal transmission mode by the processor 1003 may be as follows: If the receiver 1004 receives, within a first predetermined time period, the response message that indicates successful configuration of the to-be-switched-to signal transmission mode and that is sent by the terminal device, the processor 1003 switches the current signal transmission mode to the to-be-switched-to signal transmission mode at a moment upon reception of an N^{th} subframe signal after an end moment of the first predetermined time period, where N is a positive integer greater than or equal to 1, and the first predetermined time period starts from a moment of sending, by the transmitter 1002 to the terminal device, the control instruction information used to configure a signal transmission mode. If the receiver 1004 does not receive, within the first predetermined time period, the response message that indicates successful configuration of the to-be-switched-to signal transmission mode and that is sent by the terminal device, the processor 1003 maintains the current signal transmission mode.

In another case, the transmitter 1002 is further configured to: after the processor 1003 switches the current signal transmission mode to the to-be-switched-to signal transmission mode, send the uplink transmission resource indication information to the terminal device. The uplink transmission resource indication information is used to instruct the terminal device to determine the uplink transmission resource and transmit, to the base station by using the uplink transmission resource, the response message indicating successful configuration of the to-be-switched-to signal transmission mode.

Correspondingly, the base station further includes a receiver 1004, configured to receive the response message that indicates successful configuration of the to-be-switched-to signal transmission mode and that is sent by the terminal device.

In another case, the transmitter 1002 is further configured to: after sending, to the terminal device, the control instruction information used to configure a signal transmission mode, separately send the uplink transmission resource indication information to the terminal device by using the current signal transmission mode and the second signal transmission mode. After transmitting the uplink transmission resource indication information by using two different signal transmission modes, the base station further needs to use the detector 1001 to separately detect a first receiver corresponding to the current signal transmission mode and a second receiver corresponding to the second signal transmission mode, to determine that the response message that indicates successful configuration of the signal transmission mode and that is sent by the terminal device is able to be received through one of the first receiver or the second receiver. The processor 1003 is further configured to: use a moment of receiving the response message that indicates successful configuration of the signal transmission mode and that is sent by the terminal device as a start moment, and switch the current signal transmission mode to the to-be-switched-to signal transmission mode at a moment upon reception of a J^{th} subframe signal, where J is a positive integer greater than or equal to 1.

When the base station provided in of the example runs, the base station performs the method provided in Embodiment 1 of this application. For operating details of the base station, refer to the method provided in Embodiment 1 of this application.

In the base station provided in the example, the transmitter sends, to the terminal device in a plurality of manners, the broadcast corresponding to the to-be-switched-to signal transmission mode, so that the terminal device determines, based on the broadcast information, the configuration information of the to-be-switched-to signal transmission mode; configures the to-be-switched-to signal transmission mode based on the configuration information; and then switches the current signal transmission mode to the to-be-switched-to signal transmission mode. In addition, the base station and the terminal device separately switch, in an agreed time period, the current signal transmission mode to the to-be-switched-to signal transmission mode, to avoid a problem of cognitive inconsistency between the base station and the terminal device about a transmission mode.

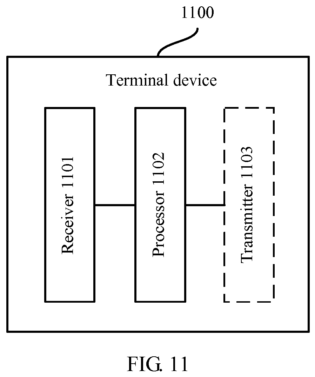

Corresponding to the another signal transmission mode switching method provided in the foregoing Embodiment 2, Embodiment 6 of the present invention further provides a terminal device. Specifically, FIG. 11 is a schematic structural diagram of the terminal device 1100 according to Embodiment 6 of the present invention. The terminal device includes a receiver 1101 and a processor 1102.

The receiver 1101 is configured to receive control instruction information that is used to configure a signal transmission mode and that is sent by a base station.

The processor 1102 is configured to switch a current signal transmission mode to a to-be-switched-to signal transmission mode based on the control instruction information. The to-be-switched-to signal transmission mode is a second signal transmission mode other than the current signal transmission mode.

Specifically, before configuring the to-be-switched-to signal transmission mode based on the control instruction, the terminal device first needs to obtain configuration information corresponding to the to-be-switched-to signal transmission mode. A specific manner of obtaining the configuration information corresponding to the to-be-switched-to signal transmission mode includes the following.

Exemplarily, in an exemplary first manner, when the base station sends, to the terminal device, the control instruction information used to configure a signal transmission mode, the base station may add a newly added broadcast information element to/delete a newly added broadcast information element from the control instruction information.

The processor 1102 is configured to: determine, based on the newly added broadcast information element and a first broadcast, the configuration information corresponding to the to-be-switched-to signal transmission mode, where the first broadcast is a broadcast corresponding to the current signal transmission mode; and configure the to-be-switched-to signal transmission mode based on the configuration information.

In a second manner, before the processor switches the current signal transmission mode to the to-be-switched-to signal transmission mode based on the control instruction information, the receiver 1101 receives a second broadcast sent by the base station. The second broadcast is a broadcast obtained after a newly added broadcast information element is added to/deleted from a first broadcast, and the first broadcast is a broadcast corresponding to the current signal transmission mode.

The processor 1102 is further configured to: determine, based on the second broadcast, the configuration information corresponding to the to-be-switched-to signal transmission mode; and configure the to-be-switched-to signal transmission mode based on the configuration information.

In a third manner, after receiving the control instruction information that is used to configure a signal transmission mode and that is sent by the base station, the receiver 1101 receives a second broadcast sent by the base station. The second broadcast is a broadcast corresponding to the to-be-switched-to signal transmission mode, the second broadcast includes an information element the same as an information element in a first broadcast or an information element having a same property as an information element in a first broadcast, and/or a newly added broadcast information element relative to the first broadcast, and the first broadcast is a broadcast corresponding to the current signal transmission mode.

The processor 1102 determines the configuration information of the to-be-switched-to signal transmission mode based on the second broadcast; and configures the to-be-switched-to signal transmission mode based on the configuration information. In a fourth manner, before the processor configures, based on the control instruction information, the to-be-switched-to signal transmission mode, the receiver 1101 separately receives a first broadcast and a second broadcast, and determines, from the first broadcast and the second broadcast, a broadcast corresponding to the to-be-switched-to signal transmission mode.

The processor 1102 determines, based on the broadcast corresponding to the to-be-switched-to signal transmission mode, configuration information corresponding to the to-be-switched-to signal transmission mode; and configures the to-be-switched-to signal transmission mode based on the configuration information.

In addition, the receiver 1101 is further configured to receive uplink transmission resource indication information sent by the base station, to determine an uplink transmission resource based on the uplink transmission resource indication information and send, to the base station, a response message indicating successful configuration of the to-be-switched-to signal transmission mode. Therefore, the terminal device further includes a transmitter 1103.

Therefore, in one case, the receiver 1101 is further configured to: before the processor 1102 switches the current signal transmission mode to the to-be-switched-to signal transmission mode, receive the uplink transmission resource indication information sent by the base station. The processor 1102 is further configured to determine the uplink transmission resource based on the uplink transmission resource indication information. The transmitter 1103 is configured to transmit, to the base station by using the uplink transmission resource, the response message indicating successful configuration of the to-be-switched-to signal transmission mode.

A specific moment of switching the signal transmission mode by the processor 1102 is as follows: A moment of receiving, by the base station, the response message indicating successful configuration of the to-be-switched-to signal transmission mode is used as a start moment, and the signal transmission mode is switched at a moment after an X^{th} subframe signal is received, where X is a positive integer greater than or equal to 1.

Alternatively, if the base station receives, within a first predetermined time period, the response message indicating successful configuration of the to-be-switched-to signal transmission mode, the current signal transmission mode is switched to the to-be-switched-to signal transmission mode at a moment upon reception of an N^{th} subframe signal after an end moment of the first predetermined time period, where N is a positive integer greater than or equal to 1, and the first predetermined time period starts from a moment of sending, by the base station, the control instruction information used to configure a signal transmission mode.

If the base station does not receive, within the first predetermined time period, the response message indicating successful configuration of the to-be-switched-to signal transmission mode, the current signal transmission mode is maintained.

In another case, the receiver 1101 is further configured to: after the processor switches the current signal transmission mode to the to-be-switched-to signal transmission mode, receive the uplink transmission resource indication information sent by the base station. The processor 1102 is further configured to determine the uplink transmission resource based on the uplink transmission resource indication information. The transmitter 1103 is configured to transmit, to the base station by using the uplink transmission resource, the response message indicating successful configuration of the to-be-switched-to signal transmission mode.

When the terminal provided in Embodiment 6 of this application runs, the terminal performs the method provided in Embodiment 2 of this application. For operating details of the terminal, refer to the method provided in Embodiment 2 of this application.

In the terminal device provided in Embodiment 6 of the present invention, the receiver obtains, in a plurality of manners, the broadcast corresponding to the to-be-switched-to signal transmission mode. The processor determines, based on the broadcast information, the configuration information of the to-be-switched-to signal transmission mode; configures the to-be-switched-to signal transmission mode based on the configuration information; and then switches the current signal transmission mode to the to-be-switched-to signal transmission mode. The base station and the terminal device separately switch, in an agreed time period, the current signal transmission mode to the to-be-switched-to signal transmission mode, to avoid a problem of cognitive inconsistency between the base station and the terminal device about a transmission mode.

A person skilled in the art may be further aware that, in combination with the examples described in the embodiments disclosed in this specification, units and algorithm steps can be implemented by electronic hardware, computer software, or a combination thereof. To clearly describe the interchangeability between the hardware and the software, the foregoing has generally described compositions and steps of each example based on functions. Whether the functions are performed by hardware or software depends on particular applications and design constraints of the technical solutions. A person skilled in the art may use different methods to implement the described functions for each particular application, but it should not be considered that the implementation goes beyond the scope of the present invention.

A person of ordinary skill in the art may understand that all or some steps in the method in the foregoing embodiments may be completed by a program instructing a processor. The program may be stored in a computer readable storage medium. The storage medium is a non-transitory (English: non-transitory) medium, for example, a random access memory, a read-only memory, a flash memory, a hard disk, a solid-state drive, a magnetic tape (English: magnetic tape), a floppy disk (English: floppy disk), an optical disc (English: optical disc), or any combination thereof.

The foregoing descriptions are merely examples of specific implementations of the present invention, but are not intended to limit the protection scope of the present invention.

## Claims

1. A signal transmission mode switching method, wherein the method comprises:
receiving, by the terminal device (300), control instruction information used to configure a signal transmission mode from a base station (310), wherein the control instruction information is radio resource control, RRC, information;
receiving, by the terminal device (300), a second broadcast from the base station, where the second broadcast is a broadcast obtained after an added broadcast information element is added to a first broadcast, wherein the first broadcast is a broadcast corresponding to a Normal Coverage, NC, mode;
determining, by the terminal device (300), based on the second broadcast, configuration information corresponding to a Coverage Enhanced, CE, mode, wherein the CE mode is configured based on the configuration information;
configuring, by the terminal device (300), the CE mode based on the configuration information; and
switching, by the terminal device (300), from the NC mode to the CE mode based on the control instruction information (320) , wherein the NC mode is supported by LTE technology, and the CE mode is supported by enhanced Machine Type Communication, eMTC, technology, the method **characterized in that**,
before the switching from the NC mode to the CE mode, the method further comprises:
receiving, by the terminal device (300), uplink transmission resource indication information from the base station;
determining, by the terminal device (300), an uplink transmission resource based on the uplink transmission resource indication information; and
transmitting, by the terminal device (300), to the base station by using the uplink transmission resource, the response message indicating successful configuration of the CE mode.

2. The method according to claim 1, wherein a specific moment of the switching the signal transmission mode is as follows: a moment of receiving, by the base station, the response message indicating successful configuration of the CE mode is used as a start moment, and the NC mode is switched to the CE mode at a moment upon reception of an Xth subframe signal, wherein X is a positive integer greater than or equal to 1.

3. The method according to claim 1, wherein a specific moment of the switching the signal transmission mode is as follows: if the base station receives, within a first predetermined time period, the response message indicating successful configuration of the CE mode, the NC mode is switched to the CE mode at a moment upon reception of an Nth subframe signal after an end moment of the first predetermined time period, wherein N is a positive integer greater than or equal to 1, and the first predetermined time period starts from a moment of sending, by the base station, the control instruction information used to configure a signal transmission mode; and
if the base station does not receive, within the first predetermined time period, the response message indicating successful configuration of the CE mode, the NC mode is maintained.

4. A terminal device (1100), wherein the terminal device comprises:
a receiver (1101), configured to receive control instruction information used to configure a signal transmission mode from a base station, wherein the control instruction information is radio resource control, RRC, information; and configured to receive a second broadcast from the base station, where the second broadcast is a broadcast obtained after an added broadcast information element is added to a first broadcast, wherein the first broadcast is a broadcast corresponding to a Normal Coverage, NC, mode; and
a processor (1102), configured to determine configuration information corresponding to a Coverage Enhanced, CE, mode, based on the second broadcast; and configured to configure the CE mode based on the configuration information; and configured to switch from the NC mode to the CE mode based on the control instruction information, wherein the NC mode is supported by LTE technology, and the CE mode is supported by enhanced Machine Type Communication, eMTC, technology, wherein the CE mode is configured based on the configuration information, the terminal device (1100) **characterized in that**,
before the switching from the NC mode to the CE mode,
the receiver (1101) is further configured to receive uplink transmission resource indication information from the base station ;
the processor (1102) is further configured to determine an uplink transmission resource based on the uplink transmission resource indication information; and
a transmitter (1103) is configured to transmit, to the base station by using the uplink transmission resource, the response message indicating successful configuration of the CE mode.

5. The terminal device according to claim 4, wherein a specific moment of the switching the signal transmission mode is as follows: a moment of sending, by the terminal device (300), the response message to the base station indicating successful configuration of the CE mode is used as a start moment, and the NC mode is switched to the CE mode at a moment upon reception of an Xth subframe signal, wherein X is a positive integer greater than or equal to 1.

6. A program comprising instructions which, when the program is executed by a processor of a terminal device, cause the terminal device to carry out the method according to claim 1.

7. A processor readable medium configured to store a program configured for performing the method according to claim 1, when run by a processor of a terminal device.

## Patentansprüche

1. Signalübertragungmodus-Umschaltverfahren, wobei das Verfahren umfasst:
Empfangen, durch das Endgerät (300), von Steuerungsanweisungsinformationen, die verwendet werden, um einen Signalübertragungsmodus von einer Basisstation (310) zu konfigurieren, wobei die Steuerungsanweisungsinformationen
Funkressourcensteuerungs(RRC)-Informationen sind;
Empfangen, durch das Endgerät (300), einer zweiten Rundsendung von der Basisstation, wobei die zweite Rundsendung eine Rundsendung ist, die erhalten wird, nachdem ein hinzugefügtes Rundsendungsinformationselement zu einer ersten Rundsendung hinzugefügt wird, wobei die erste Rundsendung eine Rundsendung ist, die einem Normale-Abdeckung(NC)-Modus entspricht;
Bestimmen, durch das Endgerät (300), basierend auf der zweiten Rundsendung, von Konfigurationsinformationen entsprechend einem Verstärkte-Abdeckung(CE)-Modus, wobei der CE-Modus basierend auf den Konfigurationsinformationen konfiguriert ist;
Konfigurieren, durch das Endgerät (300), des CE-Modus basierend auf den Konfigurationsinformationen; und
Umschalten, durch das Endgerät (300), von dem NC-Modus in den CE-Modus basierend auf den Steueranweisungsinformationen (320), wobei der NC-Modus durch LTE-Technologie unterstützt wird und der CE-Modus durch verstärkte Maschinentypkommunikation(eMTC)-Technologie unterstützt wird, wobei das Verfahren **dadurch gekennzeichnet ist, dass**
das Verfahren vor dem Umschalten von dem NC-Modus in den CE-Modus ferner umfasst:
Empfangen, durch das Endgerät (300), von Uplink-Übertragungsressourcen-Anzeigeinformationen von der Basisstation;
Bestimmen, durch das Endgerät (300), einer Uplink-Übertragungsressource basierend auf den Uplink-Übertragungsressourcen-Anzeigeinformationen; und
Übertragen, durch das Endgerät (300), an die Basisstation unter Verwendung der Uplink-Übertragungsressource, der Antwortnachricht, die eine erfolgreiche Konfiguration des CE-Modus anzeigt.

2. Verfahren nach Anspruch 1, wobei ein spezifischer Moment des Umschaltens des Signalübertragungsmodus wie folgt ist: ein Moment des Empfangens, durch die Basisstation, der Antwortnachricht, die eine erfolgreiche Konfiguration des CE-Modus anzeigt, wird als Startmoment verwendet, und der NC-Modus wird in den CE-Modus zu einem Moment bei dem Empfangen eines X-ten Subframe-Signals umgeschaltet, wobei X eine positive ganze Zahl größer als oder gleich 1 ist.

3. Verfahren nach Anspruch 1, wobei ein spezifischer Moment des Umschaltens des Signalübertragungsmodus wie folgt ist: falls die Basisstation innerhalb einer ersten zuvor bestimmten Zeitspanne die Antwortnachricht, die eine erfolgreiche Konfiguration des CE-Modus anzeigt, empfängt, wird der NC-Modus zu einem Moment bei dem Empfangen eines N-ten Subframe-Signals nach einem Endmoment der ersten zuvor bestimmten Zeitspanne in den CE-Modus umgeschaltet, wobei N eine positive ganze Zahl größer als oder gleich 1 ist, und die erste zuvor bestimmte Zeitspanne von einem Moment des Sendens, durch die Basisstation, der Steuerungsanweisungsinformationen, die verwendet werden, um einen Signalübertragungsmodus zu konfigurieren, startet; und
falls die Basisstation innerhalb der ersten zuvor bestimmten Zeitspanne nicht die Antwortnachricht empfängt, die eine erfolgreiche Konfiguration des CE-Modus anzeigt, wird der NC-Modus beibehalten.

4. Endgerät (1100), wobei das Endgerät umfasst:
einen Empfänger (1101), der konfiguriert ist, um Steuerungsanweisungsinformationen zu empfangen, die verwendet werden, um einen Signalübertragungsmodus von einer Basisstation zu konfigurieren, wobei die Steuerungsanweisungsinformationen Funkressourcensteuerungs(RRC)-Informationen sind; und konfiguriert ist, um eine zweite Rundsendung von der Basisstation zu empfangen, wobei die zweite Rundsendung eine Rundsendung ist, die erhalten wird, nachdem ein hinzugefügtes Rundsendungsinformationselement zu einer ersten Rundsendung hinzugefügt wird,
wobei die erste Rundsendung eine Rundsendung ist, die einem Normale-Abdeckung(NC)-Modus entspricht; und
einen Prozessor (1102), der konfiguriert ist, um Konfigurationsinformationen entsprechend einem Verstärkte-Abdeckung(CE)-Modus basierend auf der zweiten Rundsendung zu bestimmen; und konfiguriert ist, um basierend auf den
Steuerungsanweisungsinformationen von dem NC-Modus in den CE-Modus umzuschalten, wobei der NC-Modus durch LTE-Technologie unterstützt wird und der CE-Modus durch verstärkte Maschinentypkommunikation(eMTC)-Technologie unterstützt wird, wobei der CE-Modus basierend auf den Konfigurationsinformationen konfiguriert ist, wobei das Endgerät (1100) **dadurch gekennzeichnet ist, dass,**
vor dem Umschalten von dem NC-Modus in den CE-Modus,
der Empfänger (1101) ferner konfiguriert ist, um Uplink-Übertragungsressourcen-Anzeigeinformationen von der Basisstation zu empfangen;
der Prozessor (1102) ferner konfiguriert ist, um eine Uplink-Übertragungsressource basierend auf den Uplink-Übertragungsressourcen-Anzeigeinformationen zu bestimmen; und
ein Sender (1103) konfiguriert ist, um, an die Basisstation unter Verwendung der Uplink-Übertragungsressource, die Antwortnachricht zu übertragen, die eine erfolgreiche Konfiguration des CE-Modus anzeigt.

5. Endgerät nach Anspruch 4, wobei ein spezifischer Moment des Umschaltens des Signalübertragungsmodus wie folgt ist: ein Moment des Sendens, durch das Endgerät (300), der Antwortnachricht an die Basisstation, die eine erfolgreiche Konfiguration des CE-Modus anzeigt, wird als Startmoment verwendet, und der NC-Modus wird in den CE-Modus zu einem Moment bei dem Empfangen eines X-ten Subframe-Signals umgeschaltet, wobei X eine positive ganze Zahl größer als oder gleich 1 ist.

6. Programm, das Anweisungen umfasst, die, wenn das Programm durch einen Prozessor eines Endgeräts ausgeführt wird, das Endgerät veranlassen, das Verfahren nach Anspruch 1 durchzuführen.

7. Prozessorlesbares Medium, das konfiguriert ist, um ein Programm zu speichern, das konfiguriert ist, um das Verfahren nach Anspruch 1 durchzuführen, wenn es durch einen Prozessor eines Endgeräts vorgenommen wird.

## Revendications

1. Procédé de commutation de mode de transmission de signal, dans lequel le procédé comprend :
la réception, par le dispositif terminal (300), d'informations d'instruction de commande utilisées pour configurer un mode de transmission de signal à partir d'une station de base (310), dans lequel les informations d'instruction de commande sont des informations de commande de ressources radio, RRC ;
la réception, par le dispositif terminal (300), d'une seconde diffusion en provenance de la station de base, la seconde diffusion étant une diffusion obtenue après qu'un élément d'informations de diffusion ajouté est ajouté à une première diffusion, dans lequel la première diffusion est une diffusion correspondant à un mode de couverture normale, NC ;
la détermination, par le dispositif terminal (300), sur la base de la seconde diffusion, d'informations de configuration correspondant à un mode de couverture améliorée, CE, dans lequel le mode CE est configuré sur la base des informations de configuration ;
la configuration, par le dispositif terminal (300), du mode CE sur la base des informations de configuration ; et
la commutation, par le dispositif terminal (300), du mode NC au mode CE sur la base des informations d'instruction de commande (320), dans lequel le mode NC est pris en charge par une technologie LTE et le mode CE est pris en charge par une technologie de communication de type machine améliorée, eMTC, le procédé étant **caractérisé en ce que** avant la commutation du mode NC au mode CE, le procédé comprend en outre :
la réception, par le dispositif terminal (300), d'informations d'indication de ressource de transmission de liaison montante en provenance de la station de base ;
la détermination, par le dispositif terminal (300), d'une ressource de transmission de liaison montante sur la base des informations d'indication de ressource de transmission de liaison montante ; et
la transmission, par le dispositif terminal (300), à la station de base en utilisant la ressource de transmission de liaison montante, du message de réponse indiquant une configuration réussie du mode CE.

2. Procédé selon la revendication 1, dans lequel un moment spécifique de la commutation du mode de transmission de signal est le suivant : un moment de réception, par la station de base, du message de réponse indiquant une configuration réussie du mode CE est utilisé en tant que moment de début, et le mode NC est commuté en mode CE à un moment de la réception d'un Xième signal de sous-trame, dans lequel X est un nombre entier positif supérieur ou égal à 1.

3. Procédé selon la revendication 1, dans lequel un moment spécifique de la commutation du mode de transmission de signal est le suivant : si la station de base reçoit, au cours d'une première période de temps prédéterminée, le message de réponse indiquant une configuration réussie du mode CE, le mode NC est commuté en mode CE à un moment de la réception d'un Nième signal de sous-trame après un moment de fin de la première période de temps prédéterminée, dans lequel N est un nombre entier positif supérieur ou égal à 1, et la première période de temps prédéterminée commence à partir d'un moment d'envoi, par la station de base, des informations d'instruction de commande utilisées pour configurer un mode de transmission de signal ; et
si la station de base ne reçoit pas, au cours de la première période de temps prédéterminée, le message de réponse indiquant une configuration réussie du mode CE, le mode NC est maintenu.

4. Dispositif terminal (1100), dans lequel le dispositif terminal comprend :
un récepteur (1101), configuré pour recevoir des informations d'instruction de commande utilisées pour configurer un mode de transmission de signal à partir d'une station de base, dans lequel les informations d'instruction de commande sont des informations de commande de ressources radio, RRC ; et configuré pour recevoir une seconde diffusion en provenance de la station de base, la seconde diffusion étant une diffusion obtenue après qu'un élément d'informations de diffusion ajouté est ajouté à une première diffusion, dans lequel la première diffusion est une diffusion correspondant à un mode de couverture normale, NC ; et
un processeur (1102), configuré pour déterminer des informations de configuration correspondant à un mode de couverture améliorée, CE, sur la base de la seconde diffusion ; et configuré pour configurer le mode CE sur la base des informations de configuration ; et configuré pour commuter du mode NC au mode CE sur la base des informations d'instruction de commande, dans lequel le mode NC est pris en charge par une technologie LTE et le mode CE est pris en charge par une technologie de communication de type machine améliorée, eMTC, dans lequel le mode CE est configuré sur la base des informations de configuration, le dispositif terminal (1100) étant
**caractérisé en ce que**
avant la commutation du mode NC au mode CE,
le récepteur (1101) est en outre configuré pour recevoir des informations d'indication de ressource de transmission de liaison montante en provenance de la station de base ;
le processeur (1102) est en outre configuré pour déterminer une ressource de transmission de liaison montante sur la base des informations d'indication de ressource de transmission de liaison montante ; et
un émetteur (1103) est configuré pour transmettre, à la station de base en utilisant la ressource de transmission de liaison montante, le message de réponse indiquant une configuration réussie du mode CE.

5. Dispositif terminal selon la revendication 4, dans lequel un moment spécifique de la commutation du mode de transmission de signal est le suivant : un moment d'envoi, par le dispositif terminal (300), du message de réponse à la station de base indiquant une configuration réussie du mode CE est utilisé en tant que moment de début, et le mode NC est commuté en mode CE à un moment de la réception d'un Xième signal de sous-trame, dans lequel X est un nombre entier positif supérieur ou égal à 1.

6. Programme comprenant des instructions qui, lorsque le programme est exécuté par un processeur d'un dispositif terminal, amènent le dispositif terminal à mettre en œuvre le procédé selon la revendication 1.

7. Support lisible par processeur configuré pour stocker un programme configuré pour réaliser le procédé selon la revendication 1, lorsqu'il est exécuté par un processeur d'un dispositif terminal.
